# EUROPÄISCHE PATENTANMELDUNG

(11) **EP 4 763 755 A1**
(43) Veröffentlichungstag der Anmeldung: **24.06.2026**
(21) Anmeldenummer: 25211046.5
(22) Anmeldetag: 24.10.2025
(51) Int. Cl.: B65G 33/10

(54) **FÖRDERVORRICHTUNG FÜR EINE HEIZUNGSANLAGE SOWIE ZUGEHÖRIGE HEIZUNGSANLAGE**

(30) Priorität: 23.12.2024 EP 24223072
(71) Anmelder: Heizomat-Gerätebau + Energiesysteme GmbH, 91710 Gunzenhausen (DE)
(72) Erfinder: BLOOS, Robert, 91710 Gunzenhausen (DE)
(74) Vertreter: Tergau & Walkenhorst Intellectual Property GmbH

(57) **Zusammenfassung**

Fördervorrichtung (1) für eine Heizungsanlage (100), insbesondere eine Schüttgutheizanlage, umfassend eine Schüttgutförderstrecke (21) mit einem Schüttgutfördermittel (2) zum Befördern von als Schüttgut vorliegendem Brennmaterial entlang der Schüttgutförderstrecke (21), und ein wenigstens in einem ersten Abschnitt (4) der Schüttgutförderstrecke (21) unterhalb der Schüttgutförderstrecke (21) angeordneter Siebgutauffang (311), wobei zwischen Schüttgutförderstrecke (21) und Siebgutauffang (311) in dem ersten Abschnitt (4) ein Sieb (5) angeordnet ist.

## Beschreibung

### Technisches Gebiet

Die vorliegende Erfindung betrifft eine Fördervorrichtung für eine Heizanlage, sowie eine Heizungsanlage, bevorzugt eine Schüttgutheizanlage, insbesondere eine Hackschnitzelheizung, und ein Verfahren zum Fördern von Schüttgut in eine Heizanlage.

### Hintergrund

In modernen Heizanlagen, insbesondere in Schüttgutheizanlagen wie Hackschnitzelheizungen, ist die effiziente und zuverlässige Förderung des Brennmaterials von entscheidender Bedeutung. Schüttgutheizanlagen nutzen häufig Schüttgutförderschnecken, um das Brennmaterial von einem Speicher zur Brenneinrichtung zu transportieren. Während dieses Prozesses kann es jedoch zu verschiedenen Problemen kommen, die die Effizienz und Zuverlässigkeit der Anlage beeinträchtigen.

Insbesondere können Verunreinigungen im Brennmaterial, die in die Heizung gelangen problematisch sein und die Heizung beinträchtigen. Schüttgut, wie Hackschnitzel, kann Verunreinigungen wie Staub, Erde, kleine Steine oder andere Fremdkörper enthalten. Diese Verunreinigungen können die Brenneinrichtung beschädigen oder deren Effizienz verringern. Gleichzeitig kann es zu Verstopfungen und Blockaden in der Förderschnecke oder der Brenneinrichtung kommen, wenn Fremdkörper und ungleichmäßige Partikelgrößen im Schüttgut auftreten, was zu Betriebsunterbrechungen und erhöhtem Wartungsaufwand führt. Auch kann die ungleichmäßige Verteilung des Schüttguts entlang der Förderstrecke zu einer ineffizienten Verbrennung und ungleichmäßiger Wärmeproduktion führen. Die Reinigung der Förderschnecke und der Förderstrecke von Verunreinigungen und Rückständen kann zudem zeitaufwendig und kompliziert sein, was die Betriebskosten erhöht und die Verfügbarkeit der Anlage verringert.

### Zusammenfassende Beschreibung der Erfindung

Es ist deshalb eine der vorliegenden Erfindung zu Grunde liegende Aufgabe die Nachteile von Heizungen im Stand der Technik zu überwinden. Insbesondere ist es eine der vorliegenden Erfindung zu Grunde liegende Aufgabe, eine Heizungsanlage bereitzustellen, die Verunreinigungen im Schüttgut effektiv entfernt, Verstopfungen verhindert und eine gleichmäßige Förderung des Brennmaterials gewährleistet.

Diese und andere Probleme werden durch den Gegenstand der beigefügten unabhängigen Ansprüche gelöst.

Bevorzugte Ausführungsformen können den abhängigen Ansprüchen entnommen werden und darüber hinaus aus der folgenden Beschreibung, insbesondere unter Berücksichtigung verschiedener Ausführungsformen, wie sie in den beigefügten Ansprüchen behandelt und beschrieben sind.

Die Ausführungsformen, Merkmale und Kombinationen von Merkmalen, wie sie hier in Verbindung mit der Erfindung beschrieben werden, sowie die Kombination von Merkmalen, wie sie in den beigefügten Ansprüchen angegeben sind, aber auch jede Kombination von Merkmalen, wie sie in Verbindung mit den Ausführungsformen erwähnt und beschrieben wird, gelten als hierin offenbart, zumindest jedoch als durch einen Fachmann herleitbar. Insbesondere kann jedes Merkmal und jede Kombination von Merkmalen in den hier beschriebenen Ausführungsformen beispielsweise in einer anderen Kombination, insbesondere in einer anderen Anspruchskategorie, beansprucht werden, mindestens weil die fachkundige Person erkennen wird, dass jede einzelne Kombination der hier genannten Merkmale geeignet ist, zur Lösung des zugrunde liegenden Problems beizutragen.

Des Weiteren können jedes Merkmal und jede Kombination von Merkmalen in den Ansprüchen und in der untenstehenden Beschreibung unabhängig von dem jeweils beanspruchten Gegenstand, unabhängig von Anspruchsabhängigkeiten und Rückverweisen sowie unabhängig von der Anspruchskategorie, in der das Merkmal beansprucht wird, verwendet und separat beansprucht werden. Beispielsweise kann in einer willkürlichen Kombination, die aus einem oder mehreren Ansprüchen ausgewählt ist, eine oder mehrere Ausführungsformen gemäß der untenstehenden Beschreibung und/oder den beigefügten Abbildungen vorgesehen sein.

Die oben beschriebenen Aufgaben werden erfindungsgemäß gelöst durch eine Fördervorrichtung für eine Heizungsanlage, insbesondere eine Schüttgutheizanlage, nach der vorliegenden Erfindung. Eine erfindungsgemäße Fördereinrichtung umfasst eine Schüttgutförderstrecke mit einem Schüttgutfördermittel zum Befördern von als Schüttgut vorliegendem Brennmaterial entlang der Schüttgutförderstrecke, und ein wenigstens in einem ersten Abschnitt der Schüttgutförderstrecke unterhalb der Schüttgutförderstrecke angeordneter Siebgutauffang, wobei zwischen Schüttgutförderstrecke und Siebgutauffang in dem ersten Abschnitt ein Sieb angeordnet ist.

Dies vorliegende Erfindung erlaubt insbesondere vorteilhaft eine Fördervorrichtung bereitzustellen, die eine effiziente Trennung von Brennmaterial und unerwünschten Partikeln ermöglicht. Durch die Anordnung des Siebgutauffangs unterhalb der Schüttgutförderstrecke und das dazwischenliegende Sieb wird sichergestellt, dass nur das geeignete Brennmaterial weitertransportiert wird, während kleinere Partikel und Schmutz herausgefiltert werden. Dies führt zu einer verbesserten Verbrennungsqualität und reduziert den Wartungsaufwand der Heizungsanlage, da weniger Verunreinigungen in die Brenneinrichtung gelangen. Zudem wird die Effizienz der Heizungsanlage gesteigert, da das Brennmaterial optimal genutzt wird.

Die oben beschriebenen Aufgaben werden ebenfalls erfindungsgemäß gelöst durch eine erfindungsgemäße Heizungsanlage, bevorzugt eine Schüttgutheizanlage, insbesondere eine Hackschnitzelheizung, nach der vorliegenden Erfindung. Eine erfindungsgemäße Heizungsanlage umfasst einen Schüttgutspeicher zum Speichern von Schüttgut, insbesondere Hackschnitzel; eine Brenneinrichtung der Heizungsanlage, insbesondere Heizkessel, zur Erzeugung von Wärme mittels Verbrennens des Schüttgutes; und eine Fördervorrichtung nach der vorliegenden Erfindung, wobei das Schüttgutfördermittel eine Schüttgutförderschnecke ist, geeignet, das als Schüttgut vorliegende Brennmaterial entlang der Schüttgutförderstrecke, insbesondere von einem Schüttgutspeicher zu einer Brenneinrichtung der Heizungsanlage, zu befördern.

Die erfindungsgemäße Heizungsanlage bietet auf eine besonders vorteilhafte Weise eine effiziente und zuverlässige Wärmeversorgung. Durch die Kombination eines Schüttgutspeichers, einer Brenneinrichtung und einer Fördervorrichtung nach der vorliegenden Erfindung wird sichergestellt, dass das Brennmaterial kontinuierlich und gleichmäßig zur Brenneinrichtung transportiert wird. Dies führt zu einer optimalen Verbrennung und einer hohen Energieausbeute. Zudem reduziert die effektive Trennung von Schmutz und unerwünschten Partikeln den Wartungsaufwand und verlängert die Lebensdauer der Anlage. Die Verwendung von Hackschnitzeln als Brennmaterial trägt außerdem zur Nachhaltigkeit und zur Nutzung erneuerbarer Energien bei.

Die oben beschriebenen Aufgaben werden ebenfalls erfindungsgemäß gelöst durch ein erfindungsgemäßes Verfahren zum Fördern von Schüttgut in eine Heizungsanlage, insbesondere eine Schüttgutheizanlage, umfassend die folgenden Schritte:
- einen Schritt a) des Förderns des Schüttguts entlang einer Schüttgutförderstrecke von einem Schüttgutspeicher zu einer Brenneinrichtung der Heizungsanlage mittels eines Schüttgutfördermittels, insbesondere einer Schüttgutförderstrecke;
- einen Schritt b) der Siebung des Schüttguts durch ein zwischen der Schüttgutförderstrecke und einem Siebgutauffang, der wenigstens in einem ersten Abschnitt der Schüttgutförderstrecke unterhalb der Schüttgutförderstrecke angeordnet ist, angeordneten Sieb;
- einen Schritt d) des Auffangens von in Schritt b) erzeugtem Siebgut in dem Siebgutauffang;
- bevorzugt, einen Schritt e) des Förderns von Siebgut entlang einer Siebgutförderstrecke des Siebgutauffangs mittels eines Siebgutfördermittels, insbesondere einer Siebgutförderschnecke,
- wobei bevorzugt die Heizungsanlage eine Heizungsanlage nach der vorliegenden Erfindung ist, und wobei bevorzugt ein Schritt b) wenigstens teilweise in dem Schüttgutspeicher ausgeführt wird.

Der Kern der Erfindung ist dabei, dass der als Schüttgut bereitgestellte Brennstoff, insbesondere Holzhackschnitzel, als Aufgabegut in der Austragung eingeführt wird. Das Sieb trennt dann, bevorzugt bereits im Brennmittel- bzw. Schüttgutspeicher, bzw. Bunker, die eigentlichen gewünschten Brennstoffteile, also die Hackschnitzel, als Siebüberlauf, da diese als im Vergleich zu der "Maschenweite" des Siebs größeren Partikel nicht durch die Maschen passen und auf dem Sieb bleiben. Sie bilden den Überlauf und werden zur Brennvorrichtung gefördert. So kann bereits im Brennmittel- bzw. Schüttgutspeicher der Siebdurchgang, also kleinere Partikel, die durch die Maschen fallen, und damit diverse Verunreinigungen vom gewünschten Brenngut abgetrennt und aus dem Brennmittel- bzw. Schüttgutspeicher befördert werden.

Das erfindungsgemäße Verfahren stellt eine effiziente und systematische Förderung und Trennung von Schüttgut in einer Heizungsanlage bereit. Durch die gezielte Siebung des Schüttguts während des Förderprozesses werden unerwünschte Partikel und Schmutz effektiv entfernt, bevor das Brennmaterial die Brenneinrichtung erreicht.

Es sei im Zusammenhang mit dem erfindungsgemäßen Verfahren auch darauf hingewiesen, dass die angegebenen Schritte nicht zwangsläufig in der angegebenen Reihenfolge durchgeführt werden müssen. Die angegebenen Schritte können in jeder anderen geeigneten Reihenfolge oder auch gleichzeitig durchgeführt werden.

Allerdings kann die oben angegebene Reihenfolge für bestimmte Ausführungsformen des erfindungsgemäßen Verfahrens vorteilhaft sein. Gleichzeitig kann zum Beispiel ein Schritt a) des Förderns des Schüttguts entlang einer Schüttgutförderstrecke vor einem Schritt b) des Auffangens von in Schritt b) erzeugtem Siebgut oder sogar gleichzeitig durchgeführt werden.

Es wird zudem von einem Fachmann anerkannt werden, dass ein Merkmal, eine Ausführungsform, eine Wirkung oder ein Vorteil, wie hier in Verbindung mit der erfinderischen Vorrichtung und/oder der erfinderischen Heizungsanlage beschrieben, auch ein Merkmal, eine Ausführungsform, eine Wirkung oder ein Vorteil des erfinderischen Verfahrens sein kann, bzw. umgekehrt.

In der vorliegenden Beschreibung und den beigefügten Ansprüchen wird, sofern der Kontext nichts anderes erfordert, das Wort "umfassen" und Variationen wie "umfasst" und "umfassend" so verstanden, dass sie die Einbeziehung eines angegebenen Elements, einer ganzen Zahl oder eines Schritts oder einer Gruppe von Elementen, Ganzen Zahlen oder Schritten implizieren, jedoch nicht den Ausschluss eines anderen Elements, einer anderen ganzen Zahl oder eines anderen Schritts oder einer anderen Gruppe von Elementen, Ganzen Zahlen oder Schritten, obwohl in einigen Ausführungsformen solche anderen Elemente, ganze Zahlen oder Schritte oder Gruppen von Elementen, Ganzen Zahlen oder Schritten ausgeschlossen sein können, d.h. der Gegenstand besteht in der Einbeziehung eines angegebenen Elements, einer ganzen Zahl oder eines Schritts oder einer Gruppe von Elementen, Ganzen Zahlen oder Schritten.

Die Begriffe "ein" und "eine" und "das" und ähnliche Referenzen, die im Kontext der Beschreibung der Erfindung (insbesondere im Kontext der Ansprüche) verwendet werden, sind so auszulegen, dass sie sowohl den Singular als auch den Plural abdecken, sofern hierin nicht anders angegeben oder durch den Kontext eindeutig widersprochen. Die Angabe von Wertebereichen dient lediglich als Kurzform, um sich einzeln auf jeden einzelnen Wert innerhalb des Bereichs zu beziehen. Sofern hierin nicht anders angegeben, ist jeder einzelne Wert in die Spezifikation aufgenommen, als ob er hierin einzeln aufgeführt wäre.

Innerhalb der vorliegenden Anmeldung beziehen sich Begriffe wie "seitlich" oder "lateral", "hinten", "vorne", "oben", "unten", "Boden", "gegenüber", "innen", "außen", "vor", "nach" oder dergleichen, die die Position eines ersten Objekts relativ zu einem anderen Objekt beschreiben, vorzugsweise auf die relative Position eines jeweiligen Teils oder Objekts in Bezug auf seine Position, wenn es vollständig für seinen vorgesehenen Gebrauch montiert ist und/oder im Rahmen der vorliegenden Erfindung insbesondere mit Hinblick auf das Brennmaterial und die Förderrichtung von Brennmaterial im Heizbetrieb.

In einer bevorzugten Ausführungsform des erfindungsgemäßen Verfahrens und/oder der erfindungsgemäßen Vorrichtung und/oder der erfindungsgemäßen Heizungsanlage ist das Schüttgutfördermittel eine Schüttgutförderschnecke, die geeignet ist, Schüttgut entlang der Schüttgutförderstrecke, insbesondere von einem Schüttgutspeicher zu einer Brenneinrichtung der Heizungsanlage, zu befördern.

Dies ist insbesondere vorteilhaft, da die Verwendung einer Schüttgutförderschnecke als Schüttgutfördermittel eine gleichmäßige und kontinuierliche Förderung des Brennmaterials gewährleistet. Die Schüttgutförderschnecke ist besonders geeignet, um Schüttgut effizient entlang der Schüttgutförderstrecke zu transportieren, insbesondere von einem Schüttgutspeicher zu einer Brenneinrichtung der Heizungsanlage. Dies führt zu einer stabilen und zuverlässigen Brennstoffzufuhr, optimiert die Verbrennungsprozesse und erhöht die Gesamteffizienz der Heizungsanlage.

In einer weiteren bevorzugten Ausführungsform des erfindungsgemäßen Verfahrens und/oder der erfindungsgemäßen Vorrichtung und/oder der erfindungsgemäßen Heizungsanlage ist die Schüttgutförderstrecke, insbesondere das Schüttgutfördermittel, wenigstens abschnittsweise in einem Schüttgutförderkanal mit einem Schüttgutförderkanalboden angeordnet und der Schüttgutförderkanalboden umfasst das Sieb, das am Schüttgutförderkanalboden angebracht und/oder als Teil des Schüttgutförderkanalboden angeordnet oder ausgebildet ist.

Dies ist insbesondere vorteilhaft, da die Anordnung der Schüttgutförderstrecke in einem Schüttgutförderkanal mit einem Schüttgutförderkanalboden eine kontrollierte und geschützte Förderung des Schüttguts ermöglicht und vor allem Verletzungen durch ein unsachgemäßes Hineingreifen in die sich drehende Schnecke verhindern kann. Das im Schüttgutförderkanalboden integrierte Sieb sorgt dafür, dass unerwünschte Partikel und Schmutz während des Förderprozesses effektiv herausgefiltert werden.

Der Schüttgutförderkanal ist dabei bevorzugt im Wesentlichen U-förmig ausgestaltet. So kann besonders bevorzugt der Schüttgutförderkanalboden des Schüttgutförderkanals einen U-Grund des Schüttgutförderkanals bilden, der das Sieb umfasst.

Dies ist insbesondere vorteilhaft, da die U-förmige Gestaltung des Schüttgutförderkanals eine stabile und effiziente Förderung des Schüttguts ermöglicht. Der U-förmige Schüttgutförderkanalboden, der das Sieb umfasst, sorgt dafür, dass das Schüttgut gleichmäßig von unerwünschten Partikeln und Schmutz effektiv befreit wird.

In einer weiteren bevorzugten Ausführungsform des erfindungsgemäßen Verfahrens und/oder der erfindungsgemäßen Vorrichtung und/oder der erfindungsgemäßen Heizungsanlage umfasst der Siebgutauffang eine Siebgutförderstrecke und ein Siebgutfördermittel zum Befördern von Siebgut entlang der Siebgutförderstrecke.

Dies ist insbesondere vorteilhaft, da der Siebgutauffang mit einer Siebgutförderstrecke und einem Siebgutfördermittel eine effiziente und kontinuierliche Entfernung von unerwünschten Partikeln und Schmutz ermöglicht. Durch die gezielte Förderung des Siebguts entlang der Siebgutförderstrecke wird sichergestellt, dass die Verunreinigungen zuverlässig aus dem System entfernt werden, ohne den Förderprozess des Brennmaterials zu unterbrechen

In einer weiteren bevorzugten Ausführungsform des erfindungsgemäßen Verfahrens und/oder der erfindungsgemäßen Vorrichtung und/oder der erfindungsgemäßen Heizungsanlage ist die Siebgutförderstrecke, insbesondere das Siebgutfördermittel, wenigstens abschnittsweise in einem als Siebgutförderkanal ausgebildetem Siebgutauffang angeordnet. Bevorzugt ist das Siebgutfördermittel als Siebgutförderschnecke ausgebildet, die in dem Siebgutförderkanal angeordnet ist.

Dies ist insbesondere vorteilhaft, da die Anordnung der Siebgutförderstrecke in einem als Siebgutförderkanal ausgebildeten Siebgutauffang eine kontrollierte und effiziente Förderung des Siebguts ermöglicht. Die Verwendung einer Siebgutförderschnecke innerhalb des Siebgutförderkanals gewährleistet eine kontinuierliche und gleichmäßige Entfernung von unerwünschten Partikeln und Schmutz. Dies trägt zur Verbesserung der Reinheit des Brennmaterials bei, optimiert die Verbrennungsprozesse und reduziert den Wartungsaufwand der Heizungsanlage. Zudem wird die Effizienz der gesamten Anlage gesteigert, da das Siebgut zuverlässig und ohne Unterbrechungen aus dem System entfernt wird.

In einer weiteren bevorzugten Ausführungsform des erfindungsgemäßen Verfahrens und/oder der erfindungsgemäßen Vorrichtung und/oder der erfindungsgemäßen Heizungsanlage ist das Sieb als ein Siebblech ausgebildet. Weiterhin bevorzugt weist das Sieb, bzw. das Siebblech, eine parallel zu einem Schüttgutförderkanalboden und/oder einer Siebgutförderkanalabdeckung angeordnete Sieb-hauptfläche auf. Zusätzlich oder alternativ weist das Sieb wenigstens eine gegenüber dem Schüttgutförderkanalboden und/oder der Siebgutförderkanalabdeckung, bzw. gegenüber der Siebhauptfläche, falls vorhanden, abgewinkelte Siebseitenfläche auf. Die Siebseitenfläche bevorzugt im Wesentlichen lotrecht angeordnet oder leicht gegenüber der Lotrechten geneigt.

Dies ist insbesondere vorteilhaft, da die Ausbildung des Siebs als Siebblech eine robuste und langlebige Lösung darstellt. Die parallel zum Schüttgutförderkanalboden und/oder zur Siebgutförderkanalabdeckung angeordnete Siebhauptfläche gewährleistet eine effiziente Siebung des Schüttguts. Die abgewinkelten Siebseitenflächen, die vorzugsweise lotrecht oder leicht geneigt sind, verbessern die Stabilität und die Siebwirkung, indem sie verhindern, dass sich das Schüttgut an den Rändern ansammelt. Dies führt zu einer gleichmäßigen Verteilung des Schüttguts und einer effektiven Trennung von unerwünschten Partikeln, was die Verbrennungsqualität erhöht und den Wartungsaufwand der Heizungsanlage reduziert.

In einer weiteren bevorzugten Ausführungsform des erfindungsgemäßen Verfahrens und/oder der erfindungsgemäßen Vorrichtung und/oder der erfindungsgemäßen Heizungsanlage weist das Sieb einen im wesentlichen U-förmigen Querschnitt auf. Es ist besonders zweckdienlich, wenn die Siebhauptfläche den U-Grund bildet bzw. wenn zusätzlich oder alternativ jeweils eine gegenüber eine gegenüber dem Schüttgutförderkanalboden und/oder der Siebgutförderkanalabdeckung, bzw. gegenüber der Siebhauptfläche, falls vorhanden, abgewinkelte erste bzw. zweite Siebseitenfläche jeweils einen ersten bzw. zweiten U-Schenkel bildet.

Dies ist insbesondere vorteilhaft, da ein Sieb mit einem im Wesentlichen U-förmigen Querschnitt eine verbesserte Stabilität und Effizienz bei der Siebung des Schüttguts bietet. Die Siebhauptfläche, die den U-Grund bildet, sorgt für eine gleichmäßige Verteilung des Schüttguts und eine effektive Trennung von unerwünschten Partikeln. Die abgewinkelten Siebseitenflächen, die jeweils einen ersten und zweiten U-Schenkel bilden, verhindern das Ansammeln von Schüttgut an den Rändern und verbessern die Siebwirkung. Dies führt zu einer höheren Reinheit des Brennmaterials, optimiert die Verbrennungsprozesse und reduziert den Wartungsaufwand der Heizungsanlage.

Bevorzugt ist das Sieb mittels geeigneter Flansche an wenigstens einer Kanalwandung des Schüttgutförderkanals und/oder des Siebgutförderkanals angebracht. Beispielsweise kann das Sieb mit einer derartigen Flansch versweist oder vernietet werden.

In einer weiteren bevorzugten Ausführungsform des erfindungsgemäßen Verfahrens und/oder der erfindungsgemäßen Vorrichtung und/oder der erfindungsgemäßen Heizungsanlage ist eine Hauptförderachse des Schüttgutfördermittels, insbesondere der Schüttgutförderschnecke, parallel zu einer Hauptförderachse des Siebgutfördermittels, insbesondere der Siebgutförderschnecke, ausgerichtet.

Dies ist insbesondere vorteilhaft, da die parallele Ausrichtung der Hauptförderachsen des Schüttgutfördermittels und des Siebgutfördermittels eine abgestimmte, ggf. synchronisierte, und effiziente Förderung des Materials ermöglicht. Diese Anordnung reduziert mechanische Belastungen und Verschleiß, da die Bewegungen der beiden Fördersysteme aufeinander abgestimmt werden können. Dadurch wird die Lebensdauer der Fördervorrichtung verlängert und der Wartungsaufwand minimiert. Zudem trägt die parallele Ausrichtung zur Optimierung des gesamten Förderprozesses bei, was die Effizienz und den Platzbedarf der Heizungsanlage optimiert.

Das Sieb der erfindungsgemäßen Fördervorrichtung ist bevorzugt als Siebblech ausgebildet, wobei sodann der Siebrahmen, der das Siebgewebe oder den Siebbelag hält und für Stabilität sorgt, und das Siebgewebe, bzw. der Siebbelag, also das eigentliche Trennmedium aus Siebblech bestehen. Andere Materialien oder Anordnungen können jedoch ebenfalls erfindungsgemäß verwirklicht sein. So können Siebgewebe und Siebrahmen getrennt voneinander oder einstückig ausgebildet sein. Sie können aus Metall, Kunststoff oder anderen Materialien hergestellt werden. Insbesondre aber ein Sieb als Siebblech aus Metall hat sich in der erfindungsgemäßen Fördereinrichtung aufgrund von hoher Robustheit bewährt. Das Sieb ist bevorzugt als Siebblech ausgebildet und weist eine parallel zu einem Schüttgutförderkanalboden und/oder einer Siebgutförderkanalabdeckung angeordnete Siebhauptfläche auf und, bevorzugt, wenigstens eine gegenüber der Siebhauptfläche abgewinkelte Siebseitenfläche, die bevorzugt im Wesentlichen lotrecht angeordnet ist. Das Sieb hat einen im Wesentlichen U-förmigen Querschnitt, wobei die Siebhauptfläche den U-Grund bildet und die abgewinkelten Siebseitenflächen die U-Schenkel bilden.

Die Siebhauptfläche und wahlweise zusätzlich die Siebseitenflächen, dienen bevorzugt als das Siebgewebe, bzw. der Siebbelag. Dabei weist das Sieb und insbesondere die Siebhauptfläche bzw. die Siebseitenflächen, wenigstens eine Sieböffnung auf. Die Sieböffnung beträgt in Förderrichtung zwischen 1,0 mm und 10,0 mm, bevorzugt zwischen 2,5 und 10,0 mm, noch weiter bevorzugt zwischen 5,0 mm und 10,0 mm und am bevorzugtesten 7,0 mm. Dabei ist die Sieböffnung bevorzugt als ein quer zur Förderrichtung angeordnetes Langloch ausgebildet und angeordnet, dessen Lochbreite in Förderrichtung zwischen 1,0 mm und 10,0 mm, bevorzugt zwischen 2,5 und 10,0 mm, noch weiter bevorzugt zwischen 5,0 mm und 10,0 mm und am bevorzugtesten 7,0 mm beträgt, und wobei die Lochlänge quer zur Förderrichtung größer ist als die Lochbreite. Dies ist insbesondere vorteilhaft, da eine definierte Sieblochgröße sicherstellt, dass nur Partikel einer bestimmten Größe durch das Sieb gelangen. Eine Sieblochgröße, wie oben genannt, ermöglicht eine effektive Trennung von Schmutz und kleineren Partikeln vom Brennmaterial, insbesondere von Hackschnitzeln. Dadurch wird die Reinheit des Brennmaterials erhöht, was zu einer verbesserten Verbrennungsqualität führt.

Damit die Siebleistung besonders vorteilhaft ist, hat sich gezeigt, dass ein Abstand zwischen Siebgutförderschnecke und Sieb, bzw. Siebhauptfläche bzw. Siebseitenfläche, vorteilhafterweise zwischen 1,0 mm und 10,0 mm beträgt. Die Siebgutförderschnecke ist vorteilhafterweise relativ eng am Sieb vorbeilaufend angeordnet.

In einer weiteren bevorzugten Ausführungsform des erfindungsgemäßen Verfahrens und/oder der erfindungsgemäßen Vorrichtung und/oder der erfindungsgemäßen Heizungsanlage ist die Schüttgutförderstrecke länger als die Siebgutförderstrecke.

Dies ist insbesondere vorteilhaft, da die Siebförderstrecke nur so lange ist, wie notwendig, um eine Aufreinigung des Brennmaterials zu erreichen. So wird der Förderprozess optimiert, da das Schüttgut ausreichend Zeit hat, um durch das Sieb gefiltert zu werden, wodurch Verunreinigungen effektiver entfernt werden. Die längere Schüttgutförderstrecke wird hingegen bis zum Brenneinrichtung geführt.

In einer weiteren bevorzugten Ausführungsform des erfindungsgemäßen Verfahrens und/oder der erfindungsgemäßen Vorrichtung und/oder der erfindungsgemäßen Heizungsanlage weist die Siebgutförderstrecke insbesondere der Siebgutförderkanal, bevorzugt in einem Siebgutförderstreckenboden, wenigstens einen Auslass auf, welcher bevorzugt in einem Bereich eines Siebgutförderstreckenendes der Siebgutförderstrecke angeordnet ist.

Dies ist insbesondere vorteilhaft, da der Auslass im Siebgutförderstreckenboden eine effiziente und gezielte Entfernung des Siebguts ermöglicht. Durch die Anordnung des Auslasses im Bereich des Siebgutförderstreckenendes wird sichergestellt, dass das gesammelte Siebgut kontinuierlich und kontrolliert aus dem System entfernt wird. Dies verhindert eine Ansammlung von Verunreinigungen und sorgt für einen reibungslosen Betrieb der Fördervorrichtung.

In einer weiteren bevorzugten Ausführungsform des erfindungsgemäßen Verfahrens und/oder der erfindungsgemäßen Vorrichtung und/oder der erfindungsgemäßen Heizungsanlage weist das Schüttgutfördermittel einen Schüttgutfördermittelantrieb auf und das Siebgutfördermittel weist einen Siebgutfördermittelantrieb auf, wobei der Schüttgutfördermittelantrieb treibt das Schüttgutfördermittel und der Siebgutfördermittelantrieb treibt das Siebgutfördermittel unabhängig voneinander an.

Dies ist insbesondere vorteilhaft, da die unabhängigen Antriebe für das Schüttgutfördermittel und das Siebgutfördermittel eine flexible und präzise Steuerung der Förderprozesse ermöglichen. Durch die unabhängige Ansteuerung können die Geschwindigkeiten und Betriebsmodi der beiden Fördersysteme individuell angepasst werden, um den spezifischen Anforderungen der Heizungsanlage gerecht zu werden. Dies führt zu einer optimierten Förderung des Brennmaterials und einer effizienten Entfernung von Verunreinigungen.

In einer weiteren bevorzugten Ausführungsform des erfindungsgemäßen Verfahrens und/oder der erfindungsgemäßen Vorrichtung und/oder der erfindungsgemäßen Heizungsanlage ist Durchmesser von Siebgutförderschnecke und Schüttgutförderschnecke gleich groß.

Dies ist insbesondere vorteilhaft, da der gleiche Durchmesser von Siebgutförderschnecke und Schüttgutförderschnecke eine einheitliche und harmonisierte Förderung des Materials ermöglicht. Durch die gleiche Dimensionierung der Schnecken wird die Konstruktion der Fördervorrichtung vereinfacht und die Ersatzteilhaltung erleichtert, da weniger unterschiedliche Komponenten benötigt werden. Zudem wird die Effizienz der Förderprozesse erhöht, da die Schnecken gleichmäßig und synchron arbeiten können, was zu einer stabilen und zuverlässigen Betriebsweise der Heizungsanlage führt.

In einer weiteren bevorzugten Ausführungsform des erfindungsgemäßen Verfahrens und/oder der erfindungsgemäßen Vorrichtung und/oder der erfindungsgemäßen Heizungsanlage ist die Steigung der Siebgutförderschnecke größer als die Steigung der Schüttgutförderschnecke.

Dies ist insbesondere vorteilhaft, da eine größere Steigung der Siebgutförderschnecke im Vergleich zur Schüttgutförderschnecke eine schnellere und effizientere Entfernung von Verunreinigungen ermöglicht. Durch die erhöhte Steigung wird das Siebgut zügiger entlang der Siebgutförderstrecke transportiert, was die Trennung und Entfernung von unerwünschten Partikeln verbessert.

In einer weiteren bevorzugten Ausführungsform des erfindungsgemäßen Verfahrens und/oder der erfindungsgemäßen Vorrichtung und/oder der erfindungsgemäßen Heizungsanlage umfasst die Vorrichtung eine Steuereinrichtung zur Ansteuerung des Schüttgutfördermittelantriebs und/oder Siebgutfördermittelantriebs, dabei kann bevorzugt die Drehrichtung des Schüttgutfördermittelantriebs und/oder Siebgutfördermittelantriebs geändert werden.

Dies ist insbesondere vorteilhaft, da die Steuereinrichtung zur Ansteuerung der Antriebe eine flexible und präzise Kontrolle der Förderprozesse ermöglicht. Durch die Möglichkeit, die Drehrichtung der Antriebe zu ändern, kann die Förderrichtung des Schüttgutfördermittels und/oder des Siebgutfördermittels bei Bedarf umgekehrt werden. Dies ist insbesondere vorteilhaft, da die Steuereinrichtung zur Ansteuerung der Antriebe die Möglichkeit bietet, Blockaden durch kurzfristiges Rücklaufen der Anlage zu entfernen. Durch die Änderung der Drehrichtung des Schüttgutfördermittelantriebs und/oder des Siebgutfördermittelantriebs können Verstopfungen schnell und effizient gelöst werden, ohne dass ein manueller Eingriff erforderlich ist. Dies trägt zu einem reibungslosen Betrieb der Heizungsanlage bei, reduziert Ausfallzeiten und minimiert den Wartungsaufwand.

In einer weiteren bevorzugten Ausführungsform des erfindungsgemäßen Verfahrens und/oder der erfindungsgemäßen Vorrichtung und/oder der erfindungsgemäßen Heizungsanlage weist die Schüttgutförderstrecke, insbesondere der Schüttgutförderkanal eine Schüttgutförderstreckenabdeckung auf. Der erste Abschnitt weist bevorzugt einen nach oben offenen Abschnitt auf. Durch diesen nach oben offenen Abschnitt kann Schüttgut in die Fördereinrichtung gelangen und durch das Fördermittel transportiert werden. Besonders vorteilhaft ist es dabei, wenn dieser offene Abschnitt des ersten Abschnitts bereits in dem Schüttgutspeicher angeordnet ist.

In einer weiteren bevorzugten Ausführungsform des erfindungsgemäßen Verfahrens und/oder der erfindungsgemäßen Vorrichtung und/oder der erfindungsgemäßen Heizungsanlage weist die Schüttgutförderstrecke, insbesondere der Schüttgutförderkanal eine Schüttgutförderstreckenabdeckung auf und der erste Abschnitt weist einen, bevorzugt mit der Schüttgutförderstreckenabdeckung abgedeckten, nach oben geschlossenem Abschnitt auf. Dies ist insbesondere vorteilhaft, um einen ungewollten Eintrag in den Fördermittelkanal zu verhindern, bzw. auch, um eine entsprechende Sicherheit gegen ein Hineinlangen in die laufende Fördermitteleinrichtung zu verhindern.

In einer weiteren bevorzugten Ausführungsform des erfindungsgemäßen Verfahrens und/oder der erfindungsgemäßen Vorrichtung und/oder der erfindungsgemäßen Heizungsanlage weist die Schüttgutförderstrecke, insbesondere der Schüttgutförderkanal eine Schüttgutförderstreckenabdeckung auf und der erste Abschnitt hat einen nach oben offenen Abschnitt und einen nach oben mit der Schüttgutförderstreckenabdeckung abgedeckten geschlossenen Abschnitt, wobei der nach oben offenen Abschnitt vor dem nach oben geschlossenen Abschnitt angeordnet ist. Dies ist insbesondere vorteilhaft, da der nach oben offenen Abschnitt in dem Schüttgutvorrat angeordnet werden kann, so dass Schüttgut in den Förderkanal fällt und sodann Richtung Brennkammer gefördert wird wobei dort, insbesondere außerhalb des Schüttgutvorrats, der nach oben mit der Schüttgutförderstreckenabdeckung abgedeckten geschlossenen Abschnitt ein ungewolltes Hineingreifen oder einen ungewollten Eintrag von Materialien verhindert.

In einer weiteren bevorzugten Ausführungsform des erfindungsgemäßen Verfahrens und/oder der erfindungsgemäßen Vorrichtung und/oder der erfindungsgemäßen Heizungsanlage ist das Schüttgutfördermittel eine Schüttgutförderschnecke, die im nach oben offenen Abschnitt eine Steigung aufweist, die kleiner ist als im geschlossenen Abschnitt. Dies ist insbesondere vorteilhaft, da im nach oben offenen Abschnitt zunächst ein Eintrag von Schüttgut erfolgt. Hier wird mit der kleineren Steigung erreicht, dass zunächst weniger Material gefördert und abtransportiert wird. Der Fachmann wird dabei verstehen, dass zusätzlich oder alternativ zu einer Anpassung der Steigung der Förderschnecke die Förderleistung auch durch eine Anpassung der Drehgeschwindigkeit erfolgen kann.

In einer weiteren bevorzugten Ausführungsform des erfindungsgemäßen Verfahrens und/oder der erfindungsgemäßen Vorrichtung und/oder der erfindungsgemäßen Heizungsanlage ist der Durchmesser der Schüttgutförderschnecke im nach oben offenem Abschnitt kleiner als im geschlossenen Abschnitt.

In einer weiteren bevorzugten Ausführungsform des erfindungsgemäßen Verfahrens und/oder der erfindungsgemäßen Vorrichtung und/oder der erfindungsgemäßen Heizungsanlage umfasst die Vorrichtung und/oder die Heizungsanlage eine Gelenkarmaustragung. Die Gelenkaustragung umfasst einen Gelenkarmfräser, bevorzugt mit wenigstens zwei parallel geführten Gelenkarmen, wie bspw.. in EP 2 385 006 B1 beschrieben. Weiter umfasst die Gelenkaustagung ein Austragungsgetriebe und optional, einen Gelenkarmaustragungsantrieb.

Dies ist insbesondere vorteilhaft, da die Gelenkarmaustragung eine präzise und flexible Materialentnahme ermöglicht. Durch den Einsatz von wenigstens zwei parallel geführten Gelenkarmen wird eine gleichmäßige und effiziente Austragung des Materials gewährleistet. Das Austragungsgetriebe und der optionale Gelenkarmaustragungsantrieb tragen zusätzlich zur Optimierung der Austragungsprozesse bei, indem sie eine kontinuierliche und zuverlässige Materialförderung sicherstellen. Dies führt zu einer erhöhten Betriebseffizienz und einer Reduzierung von Ausfallzeiten.

In einer weiteren bevorzugten Ausführungsform des erfindungsgemäßen Verfahrens und/oder der erfindungsgemäßen Vorrichtung und/oder der erfindungsgemäßen Heizungsanlage umfasst die Vorrichtung und/oder die Heizungsanlage eine Schubbodenaustragung, bevorzugt umfassend wenigstens eine Schubbodenlamelle.

Dies ist insbesondere vorteilhaft, da die Schubbodenaustragung eine gleichmäßige und kontrollierte Materialförderung ermöglicht. Durch die Verwendung von wenigstens einer Schubbodenlamelle wird die Effizienz der Materialbewegung erhöht, was zu einer verbesserten Leistung der Vorrichtung und/oder Heizungsanlage führt.

In einer weiteren bevorzugten Ausführungsform des erfindungsgemäßen Verfahrens und/oder der erfindungsgemäßen Vorrichtung und/oder der erfindungsgemäßen Heizungsanlage ist der nach oben offene Abschnitt, wenigstens abschnittsweise, bevorzugt vollständig, in dem Schüttgutspeicher angeordnet.

Dies ist insbesondere vorteilhaft, da der nach oben offene Abschnitt der Schüttgutförderstrecke, der sich innerhalb des Schüttgutspeichers befindet, eine direkte und kontinuierliche Zuführung des Brennmaterials zur Fördervorrichtung ermöglicht. Dadurch wird der Materialfluss optimiert und Unterbrechungen im Förderprozess werden minimiert. Zudem wird durch die Anordnung innerhalb des Schüttgutspeichers der Platzbedarf außerhalb des Speichers reduziert, was zu einer kompakteren Bauweise der gesamten Heizungsanlage führt.

In einer weiteren bevorzugten Ausführungsform des erfindungsgemäßen Verfahrens und/oder der erfindungsgemäßen Vorrichtung und/oder der erfindungsgemäßen Heizungsanlage umfasst die Heizungsanlage bzw. Vorrichtung eine, bevorzugt am Ende der Schüttgutförderstrecke angeordnete, Rückbrandsicherung.

Dies ist insbesondere vorteilhaft, da die am Ende der Schüttgutförderstrecke angeordnete Rückbrandsicherung einen effektiven Schutz gegen das Zurückschlagen von Flammen oder heißen Gasen in den Schüttgutspeicher bietet. Dadurch wird das Risiko eines Brandes im Schüttgutspeicher erheblich reduziert, was die Sicherheit der gesamten Heizungsanlage erhöht. Zudem trägt die Rückbrandsicherung zur Verlängerung der Lebensdauer der Anlage bei, da sie verhindert, dass hohe Temperaturen und Flammen die Fördervorrichtung und andere empfindliche Komponenten beschädigen.

In einer weiteren bevorzugten Ausführungsform des erfindungsgemäßen Verfahrens und/oder der erfindungsgemäßen Vorrichtung und/oder der erfindungsgemäßen Heizungsanlage umfasst die Heizungsanlage einen Einschubbrenner, der bevorzugt eine Stockerschnecke umfasst.

Dies ist insbesondere vorteilhaft, da der Einschubbrenner, insbesondere mit einer Stockerschnecke, eine präzise und gleichmäßige Zuführung des Brennmaterials zur Brennkammer ermöglicht. Dadurch wird eine optimale Verbrennung gewährleistet, was zu einer höheren Effizienz der Heizungsanlage führt. Zudem kann die Stockerschnecke das Brennmaterial kontinuierlich und bedarfsgerecht dosieren, was die Betriebssicherheit erhöht und die Emissionen reduziert.

### Kurzbeschreibung der Figuren

Die vorliegende Erfindung wird im Folgenden ausführlicher erläutert unter Bezugnahme auf die Zeichnungen, aus denen weitere Merkmale, Ausführungsformen und Vorteile entnommen werden können. In den in den Abbildungen gezeigten Ausführungsformen werden Elemente, die ähnliche oder identische Funktionen haben, mit gleichen Bezugszeichen versehen. Es wird darauf hingewiesen, dass die Abbildungen möglicherweise nicht maßstabsgetreu zueinander sind.

Dabei zeigt:
FIG 1A eine schematische Darstellung einer erfindungsgemäßen Vorrichtung in Draufsicht,
FIG 1B eine schematische Darstellung einer erfindungsgemäßen Vorrichtung in einem Längsquerschnitt,
FIG 2 eine schematische Darstellung einer erfindungsgemäßen Vorrichtung in einer perspektivischen Ansicht;
FIG 3 einen schematischen Querquerschnitt durch die Fördereinrichtung;
FIG 4A und 4B jeweils einen schematischen Aufbau einer erfindungsgemäßen Heizungsanlage; und
FIG 5 eine schematische Darstellung eines Abschnitts des Siebs.

### Detaillierte Beschreibung

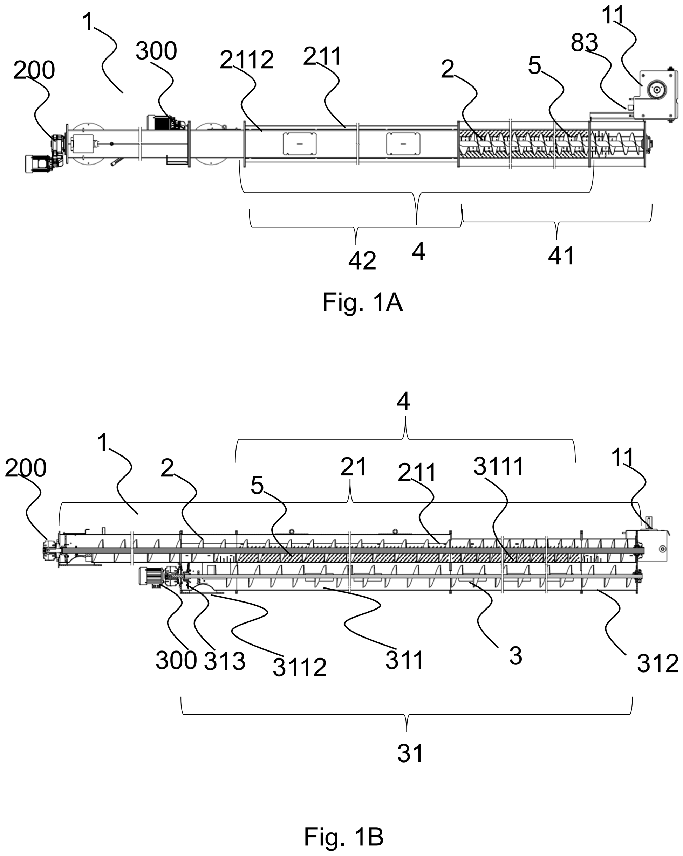

FIG 1A zeigt eine schematische Darstellung einer erfindungsgemäßen Vorrichtung in Draufsicht. Die Fördervorrichtung 1 ist besonders geeignet und eingerichtet für eine Heizungsanlage 100, die als eine Schüttgutheizanlage, insbesondere eine Hackschnitzelheizanlage ausgestaltet ist. Die Fördervorrichtung 1 umfasst eine Schüttgutförderstrecke 21 mit einem Schüttgutfördermittel 2 zum Befördern von als Schüttgut vorliegendem Brennmaterial entlang der Schüttgutförderstrecke 21, was am besten in FIG 1B zu sehen ist. Das Schüttgutfördermittel 2 ist als eine Schüttgutförderschnecke ausgebildet, die geeignet ist, als Schüttgut vorliegendes Brennmaterial entlang der Schüttgutförderstrecke 21, insbesondere von einem Schüttgutspeicher 6 zu einer Brenneinrichtung 7 der Heizungsanlage 100, zu befördern.

FIG 1B zeigt eine schematische Darstellung der in FIG 1 A dargestellten erfindungsgemäßen Vorrichtung in einem Längsquerschnitt, jedoch ohne Kanalabdeckung 2112. Unterhalb der Schüttgutförderstrecke 21 ist in einem ersten Abschnitt 4 ein Siebgutauffang 311 angeordnet. Zwischen der Schüttgutförderstrecke 21 und dem Siebgutauffang 311 befindet sich in diesem ersten Abschnitt 4 das Sieb 5.

Besonders gut in Fig. 1A zu erkennen, weist die Schüttgutförderstrecke 21, insbesondere der Schüttgutförderkanal 211 eine Schüttgutförderstreckenabdeckung 2112 auf. Diese kann mit entsprechenden schematisch ohne Referenzzeichen angedeuteten Eingriffsklappen versehen sein. Dabei weist der erste Abschnitt 4 einen nach oben offenen Abschnitt 41 auf. In diesem nach oben offene Abschnitt 41 kann von oben Schüttgut zur Schüttgutförderstrecke 21 und dem Schüttgutfördermittel 2 gelangen. Weiterhin weist die Schüttgutförderstrecke 21, insbesondere der Schüttgutförderkanal 211 einen mit der Schüttgutförderstreckenabdeckung 2112 abgedeckten nach oben geschlossenen Abschnitt 42 auf. Wie aus Fig. 1A insbesondere ersichtlich ist also der erste Abschnitt 4 in einen nach oben offenen Abschnitt 41 und einen nach oben mit der Schüttgutförderstreckenabdeckung 2112 abgedeckten geschlossenen Abschnitt 42 unterteil, wobei der nach oben offene Abschnitt 41 vor dem nach oben geschlossenen Abschnitt 42 angeordnet ist. Mit anderen Worten wird Schüttgut von oben in den nach oben offenen Abschnitt 41 fallen und sodann mittels des Schüttgutfördermittels 2 durch den nach oben mit der Schüttgutförderstreckenabdeckung 2112 abgedeckten geschlossenen Abschnitt 42 Richtung Brenneinrichtung 7 transportiert. Dabei wird bereits im nach oben offenen Abschnitt 41 eine Siebung des Schüttguts durch den zwischen der Schüttgutförderstrecke 21 und dem Siebgutauffang 311 angeordneten Sieb 5, der auch im Abschnitt 41 der Schüttgutförderstrecke 21 unterhalb der Schüttgutförderstrecke 21 angeordnet ist, gesiebt.

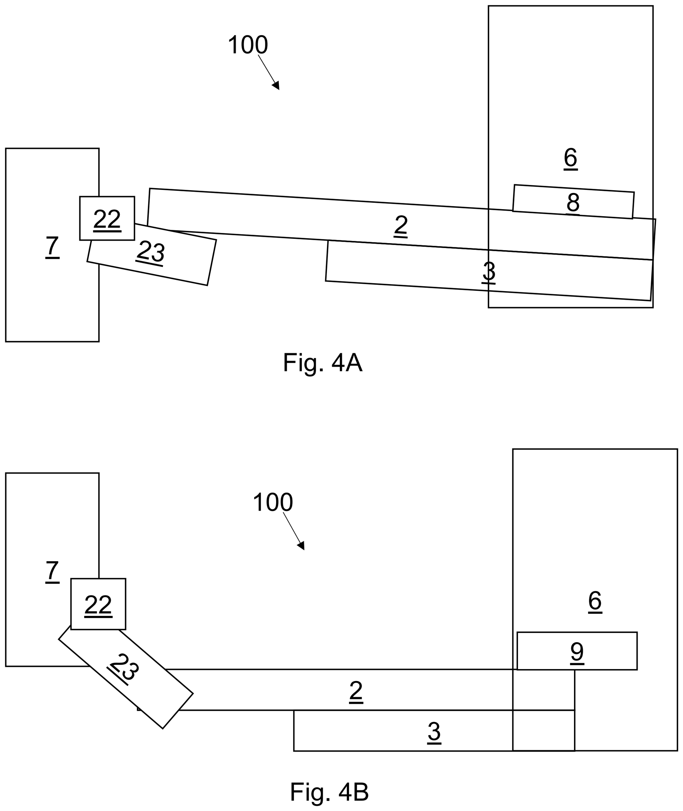

Die Fördervorrichtung umfasst eine Schüttgutförderschnecke 2 als Schüttgutfördermittel 2, die geeignet ist, als Schüttgut vorliegendes Brennmaterial, insbesondere Hackschnitzel, entlang der Schüttgutförderstrecke 21, insbesondere von einem Schüttgutspeicher 6 zu einer Brenneinrichtung 7 der Heizungsanlage 100, zu befördern. Eine derartige Heizungsanlage 100 ist schematisch in Fig. 4 dargestellt.

Die Schüttgutförderstrecke 21, insbesondere das Schüttgutfördermittel 2, ist wenigstens abschnittsweise in einem Schüttgutförderkanal 211 mit einem Schüttgutförderkanalboden 2111 angeordnet. Der Schüttgutförderkanalboden 2111 umfasst das Sieb 5, das am Schüttgutförderkanalboden 2111 angebracht und/oder als Teil des Schüttgutförderkanalbodens 2111 angeordnet oder ausgebildet ist. Der Schüttgutförderkanal 211 ist im Wesentlichen U-förmig ausgestaltet, wobei der Schüttgutförderkanalboden 2111 den U-Grund des Schüttgutförderkanals 211 bildet und das Sieb 5 umfasst.

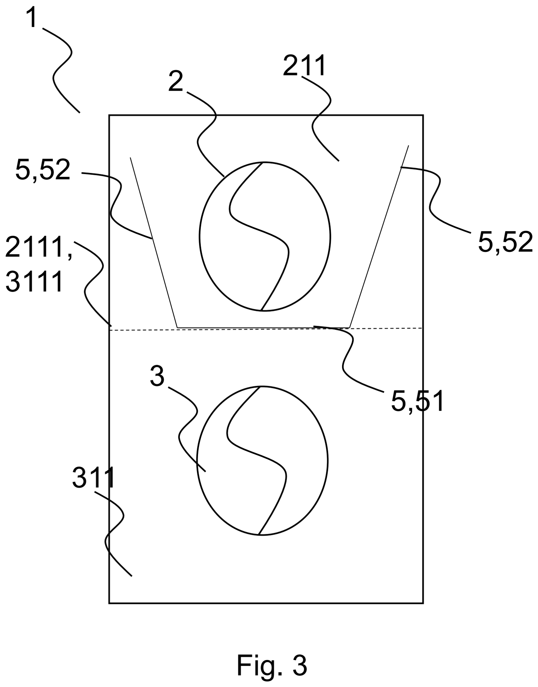

Der Siebgutauffang 311 umfasst eine Siebgutförderstrecke 31 und ein Siebgutfördermittel 3 zum Befördern von Siebgut entlang der Siebgutförderstrecke 31. Die Siebgutförderstrecke 31, insbesondere das Siebgutfördermittel 3, ist wenigstens abschnittsweise in einem als Siebgutförderkanal 311 ausgebildeten Siebgutauffang 311 angeordnet. Das Siebgutfördermittel 3 ist als Siebgutförderschnecke ausgebildet, die in dem Siebgutförderkanal 311 angeordnet ist. Das Sieb 5, bevorzugt als Siebblech ausgebildet, weist eine parallel zu einem Schüttgutförderkanalboden 2111 und/oder einer Siebgutförderkanalabdeckung 3111 angeordnete Siebhauptfläche 51 auf und, bevorzugt, wenigstens eine gegenüber der Siebhauptfläche 51 abgewinkelte Siebseitenfläche 52, die bevorzugt im Wesentlichen lotrecht angeordnet ist. Das Sieb 5 hat einen im Wesentlichen U-förmigen Querschnitt, wobei die Siebhauptfläche 51 den U-Grund bildet und die abgewinkelten Siebseitenflächen 52 die U-Schenkel bilden. Dies ist besonders gut ersichtlich in Fig. 3 dargestellt, welche einen Querquerschnitt durch die Fördervorrichtung 1 zeigt.

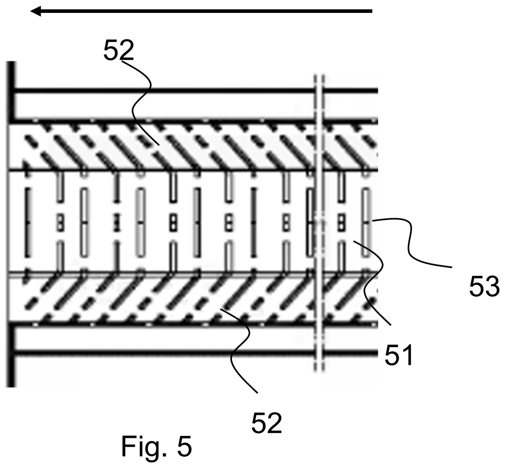

In Fig. 5 ist eine schematische Draufsicht eines Abschnitts des Siebes 5 dargestellt. Hieraus ersichtlich ist, dass das Sieb eine Vielzahl Sieböffnungen 53 aufweist. Aus Gründen der Darstellbarkeit ist nur einer der Sieböffnungen 53 mit einem Referenzzeichen versehen, die sowohl in der Siebhauptfläche 51 als auch in den abgewinkelten Siebseitenflächen 52 vorgesehen sind. Sie sind als quer zur Förderrichtung angeordnete Langlöcher ausgebildet, deren Lochbreite in Förderrichtung zwischen 1,0 mm und 10,0 mm, bevorzugt zwischen 2,5 und 10,0 mm, noch weiter bevorzugt zwischen 5,0 mm und 10,0 mm und am bevorzugtesten 7,0 mm beträgt, und wobei die Lochlänge quer zur Förderrichtung größer ist als die Lochbreite. Damit weist das Sieb 5 eine Sieblochgröße auf, die geeignet ist, um Hackschnitzel zurückzuhalten und Schmutz durchzulassen.

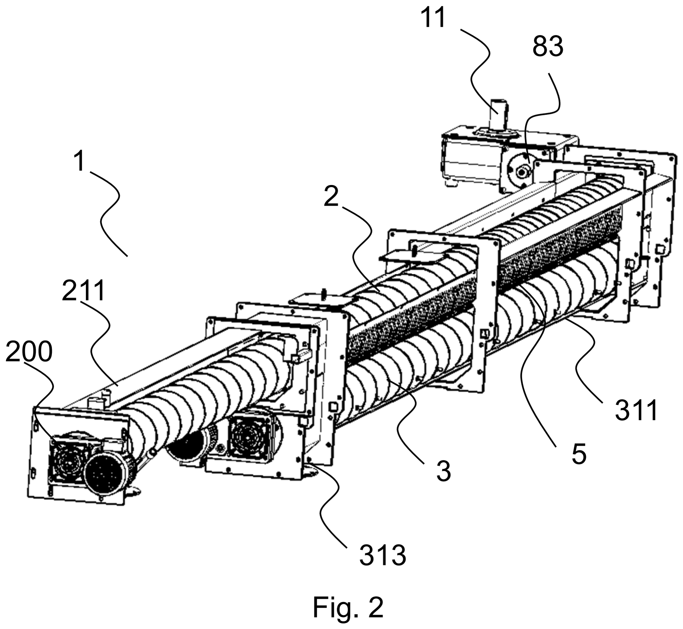

Leicht aus insbesondre Fig. 1A und Fig. 2 ersichtlich, ist die Hauptförderachse des Schüttgutfördermittels 2, insbesondere der Schüttgutförderschnecke, parallel zur Hauptförderachse des Siebgutfördermittels 3, insbesondere der Siebgutförderschnecke, ausgerichtet.

Das Schüttgutfördermittel 2 und das Siebgutfördermittel 3 sind jeweils mit unabhängigen Antrieben ausgestattet, die eine unabhängige Steuerung der Fördergeschwindigkeit ermöglichen. Der Durchmesser der Siebgutförderschnecke 3 und der Schüttgutförderschnecke 2 ist gleich groß, wobei die Steigung der Siebgutförderschnecke 3 größer ist als die der Schüttgutförderschnecke 2. Die Vorrichtung umfasst eine Steuereinrichtung zur Ansteuerung der Antriebe, die bevorzugt eingerichtet ist, die Drehrichtung der Antriebe zu ändern.

Mit der dargestellten Ausführungsform des erfindungsgemäßen Fördermittels, lässt sich besonders vorteilhaft das erfindungsgemäße Verfahren zum Fördern von Schüttgut in eine Heizungsanlage 100, insbesondere eine Schüttgutheizanlage, realisieren. Dabei wird zunächst in einem Schritt a) das Schüttgut entlang der Schüttgutförderstrecke 21 von einem Schüttgutspeicher 6 zu einer Brenneinrichtung 7 der Heizungsanlage 100 mittels des Schüttgutfördermittels 2, insbesondere der Schüttgutförderstrecke 21, gefördert. In einem Schritt b) wird das Schüttguts durch das zwischen der Schüttgutförderstrecke 21 und dem Siebgutauffang 311, angeordneten Sieb 5, gesiebt. In einem Schritt d) wird das in Schritt b) erzeugte Siebgut in dem Siebgutauffang (311) aufgefangen und in einem Schritt e) entlang der Siebgutförderstrecke 31 des Siebgutauffangs 311 mittels des Siebgutfördermittels 3, insbesondere der Siebgutförderschnecke gefördert.

In Fig. 4A und 4B sind schematisch zwei mögliche Ausführungsformen der erfindungsgemäßen Heizungsanlage dargestellt.

Daraus unmittelbar ersichtlich ist, dass erfindungsgemäß ein Schritt b), also das Sieben durch das Sieb 5, bereits wenigstens teilweise in dem Schüttgutspeicher 6 ausgeführt wird.

In beiden in Fig.4A bzw. 4B dargestellten Ausführungsformen der erfindungsgemäßen Heizungsanlage 100, ist diese eine Schüttgutheizanlage für Hackschnitzel und umfasst Bunker 6 als Schüttgutspeicher zum Speichern von Hackschnitzelschüttgut.

Eine Brenneinrichtung 7 der Heizungsanlage 100 ist als Heizkessel bereitgestellt und dient der Erzeugung von Wärme mittels Verbrennens der Hackschnitzel. Die Fördervorrichtung 1, ist wie oben beschrieben und umfasst das Schüttgutfördermittel 2, das eine Schüttgutförderschnecke ist und das als Schüttgut vorliegende Brennmaterial entlang der Schüttgutförderstrecke 21, insbesondere von einem Schüttgutspeicher 6 zu der Brenneinrichtung 7 der Heizungsanlage 100, zu befördern.

In Fig. 4A ist in einer ersten Ausführungsform der erfindungsgemäßen Heizungsanlage 100 eine Gelenkarmaustragung 8 umfasst. Die einen Gelenkarmfräser 81 aufweist, der mit zwei parallel geführten Gelenkarmen 811, 812 ausgestattet ist. Diese können unmittelbar mit dem Austragungsgetriebe 11 verbunden sein. Optional, kann auch ein Gelenkarmaustragungsantrieb 83 vorgesehen sein. Die Entnahme der Hackschnitzel aus dem Bunker 6 erfolgt in diesem Fall also über eine Gelenkarmfräse 8, die über die Siebschnecke 2 mit angebautem Austragungsgetriebe oder optional über einen separaten Antrieb, angetrieben werden kann. Die Siebschnecke wird über einen eigenen Motor angetrieben. Angesteuert über separaten Schaltschrank oder den Kesselschaltschrank.

Alternativ, und wie in Fig. 4B in einer zweiten erfindungsgemäßen Ausführungsform dargestellt, kann die Heizungsanlage 100 eine Schubbodenaustragung 9 umfassen, die bspw. Schubbodenlamellen aufweist. Dies dient der Befüllung der Fördervorrichtung 1 in Abschnitt 41. Anschließend wird über einen Kettenförderer 23 das Hackgut weiter zur Rückbrandsicherung 22 gefördert. Der Weitertransport kann auch über eine Richtungsänderung oder einen Steigschneckenförderer oder Richtungsänderung(en) erfolgen.

In beiden in Fig. 4A oder Fig. 4B dargestellten Alternativen wird unmittelbar im Bunker 6 der nach oben offene Abschnitt 41 der Fördervorrichtung 1, wenigstens abschnittsweise, bevorzugt vollständig, in dem Schüttgutspeicher 6 angeordnet. Dazwischen Schüttgutförderstrecke 21 und Siebgutauffang 311 bereits in diesem Teil des ersten Abschnitts 4 das Sieb 5 angeordnet ist, wird unmittelbar im Schüttgutspeicher 6 bereits mit dem Sieben und dem Abtrag des Siebgutes begonnen.

Am Ende der Schüttgutförderstrecke 21 ist in der Heizungsanlage 100 eine Rückbrandsicherung 22, bspw. in Form einer Zellenradschleuse und/oder einem Schieber. Vor der Rückbrandsicherung können auch noch weitere Transporteinrichtungen wie Kettenförderer, Schneckensteigförderer oder Richtungsänderungen eingebaut werden. Insbesondere kann der Einschubbrenner 23 eine Stockerschnecke 231 umfassen.

Vorzugsweise ist die Schüttgutförderstrecke 21 länger als die Siebgutförderstrecke 31. So kann die Schüttgutförderstrecke 21 bis hin zum Brennkessel 7 bzw. zur Rückbrandsicherung 22 geführt werden und das Siebgut kann vorher bereits abtransportiert werden. Die Siebgutförderstrecke 31, insbesondere der Siebgutförderkanal 311, weist hierzu wenigstens einen Auslass 3112 auf, der bevorzugt in einem Bereich eines Siebgutförderstreckenendes 313 angeordnet ist.

### Referenzzeichenliste

- 1 -: Fördervorrichtung
- 11 -: Austragungsgetriebe für Fräsarm
- 2 -: Schüttgutfördermittel, Schüttgutförderschnecke
- 200 -: Schüttgutfördermittelantrieb
- 21 -: Schüttgutförderstrecke
- 211 -: Schüttgutförderkanal
- 2111 -: Schüttgutförderkanalboden
- 2112 -: Schüttgutförderstreckenabdeckung
- 22-: Rückbrandsicherung
- 23-: Einschubbrenner
- 231-: Stockerschnecke
- 3 -: Siebgutfördermittel
- 300 -: Siebgutfördermittelantrieb
- 31 -: Siebgutförderstrecke
- 311 -: Siebgutauffang, Siebgutförderkanal
- 312 -: Siebgutförderstreckenboden
- 313 -: Siebgutförderstreckenende
- 3111 -: Siebgutförderkanalabdeckung
- 3112 -: Auslass
- 4 -: Erster Abschnitt der Schüttgutförderstrecke
- 41-: nach oben offenen Abschnitt
- 42 -: nach oben geschlossener Abschnitt
- 5 -: Sieb
- 51 -: Siebhauptfläche
- 52 -: Siebseitenfläche
- 53 -: Sieböffnung
- 6 -: Schüttgutspeicher
- 7 -: Brenneinrichtung
- 8 -: Gelenkarmaustragung
- 81 -: Gelenkarmfräser
- 811, 812-: Gelenkarme
- 83-: Gelenkarmaustragungsantrieb
- 9-: Schubbodenaustragung
- 100 -: Heizungsanlage

## Patentansprüche

1. Fördervorrichtung (1) für eine Heizungsanlage (100), insbesondere eine Schüttgutheizanlage, umfassend
- eine Schüttgutförderstrecke (21) mit einem Schüttgutfördermittel (2) zum Befördern von als Schüttgut vorliegendem Brennmaterial entlang der Schüttgutförderstrecke (21), und
- ein wenigstens in einem ersten Abschnitt (4) der Schüttgutförderstrecke (21) unterhalb der Schüttgutförderstrecke (21) angeordneter Siebgutauffang (311), wobei
- zwischen Schüttgutförderstrecke (21) und Siebgutauffang (311) in dem ersten Abschnitt (4) ein Sieb (5) angeordnet ist.

2. Fördervorrichtung (1) nach Anspruch 1, wobei das Schüttgutfördermittel (2) eine Schüttgutförderschnecke ist, die geeignet ist, als Schüttgut vorliegendes Brennmaterial entlang der Schüttgutförderstrecke (21), insbesondere von einem Schüttgutspeicher (6) zu einer Brenneinrichtung (7) der Heizungsanlage (100), zu befördern.

3. Fördervorrichtung (1) nach Anspruch 1 oder 2,
- wobei die Schüttgutförderstrecke (21), insbesondere das Schüttgutfördermittel (2), wenigstens abschnittsweise in einem Schüttgutförderkanal (211) mit einem Schüttgutförderkanalboden (2111) angeordnet ist und
- wobei der Schüttgutförderkanalboden (2111) das Sieb (5) umfasst, das am Schüttgutförderkanalboden (2111) angebracht und/oder als Teil des Schüttgutförderkanalboden (2111) angeordnet oder ausgebildet ist.

4. Fördervorrichtung (1) nach Anspruch 3, wobei der Schüttgutförderkanal (211) im Wesentlichen U-förmig ausgestaltet ist und der Schüttgutförderkanalboden (2111) des Schüttgutförderkanals (211) ein U-Grund des Schüttgutförderkanals (211) ist, der das Sieb (5) umfasst und/oder
wobei das Sieb (5), einen im wesentlichen U-förmigen Querschnitt aufweist, und wobei eine Siebhauptfläche (51) den U-Grund bildet, und wobei jeweils eine gegenüber der Siebhauptfläche (51) abgewinkelte erste bzw. zweite Siebseitenfläche (52) jeweils einen ersten bzw. zweiten U-Schenkel bildet.

5. Fördervorrichtung (1) nach einem der Ansprüche 1 bis 4, wobei der Siebgutauffang (311) eine Siebgutförderstrecke (31) und ein Siebgutfördermittel (3) zum Befördern von Sieb gut entlang der Siebgutförderstrecke (31) umfasst und, wobei bevorzugt die Siebgutförderstrecke (31), insbesondere das Siebgutfördermittel (3), wenigstens abschnittsweise in einem als Siebgutförderkanal (311) ausgebildetem Siebgutauffang (311) angeordnet ist, wobei weiter bevorzugt das Siebgutfördermittel (3) als Siebgutförderschnecke (3) ausgebildet ist, die in dem Siebgutförderkanal (311) angeordnet ist.

6. Fördervorrichtung (1) nach einem der Ansprüche 1 bis 5, wobei das Sieb (5), das bevorzugt als ein Siebblech ausgebildet ist, eine parallel zu einem Schüttgutförderkanalboden (2111) und/oder einer Siebgutförderkanalabdeckung (3111) angeordnete Siebhauptfläche (51) aufweist, und, bevorzugt, wenigstens eine gegenüber der Siebhauptfläche (51) abgewinkelte Siebseitenfläche (52) aufweist, die bevorzugt im Wesentlichen lotrecht angeordnet ist.

7. Fördervorrichtung (1) nach einem der Ansprüche 1 bis 6, wobei eine Hauptförderachse des Schüttgutfördermittels (2), insbesondere der Schüttgutförderschnecke, parallel zu einer Hauptförderachse des Siebgutfördermittels (3), insbesondere der Siebgutförderschnecke (3), ausgerichtet ist.

8. Fördervorrichtung (1) nach einem der Ansprüche 1 bis 7, wobei die Schüttgutförderstrecke (21) länger als die Siebgutförderstrecke (31) ist.

9. Fördervorrichtung (1) nach einem der Ansprüche 1 bis 8, wobei die Siebgutförderstrecke (31) insbesondere der Siebgutförderkanal (311), bevorzugt in einem Siebgutförderstreckenboden (312), wenigstens einen Auslass (3112) aufweist, welcher bevorzugt in einem Bereich eines Siebgutförderstreckenendes (313) der Siebgutförderstrecke (31) angeordnet ist.

10. Fördervorrichtung (1) nach einem der Ansprüche 1 bis 9, wobei das Schüttgutfördermittel (2) einen Schüttgutfördermittelantrieb (200) aufweist und das Siebgutfördermittel (3) einen Siebgutfördermittelantrieb (300) aufweist, und wobei der Schüttgutfördermittelantrieb (200) das Schüttgutfördermittel (2) und der Siebgutfördermittelantrieb (300) das Siebgutfördermittel (3) unabhängig voneinander antreibt.

11. Fördervorrichtung (1) nach einem der Ansprüche 1 bis 10, wobei der Durchmesser von Siebgutförderschnecke (3) und Schüttgutförderschnecke (2) gleich groß ist, und/oder die Steigung der Siebgutförderschnecke (3) größer als die Steigung der Schüttgutförderschnecke (2) ist.

12. Fördervorrichtung (1) nach einem der Ansprüche 1 bis 11, wobei die Schüttgutförderstrecke (21), insbesondere der Schüttgutförderkanal (211) eine Schüttgutförderstreckenabdeckung (2112) aufweist und wobei der erste Abschnitt (4) einen nach oben offenen Abschnitt (41) aufweist und/oder die Schüttgutförderstrecke (21), insbesondere der Schüttgutförderkanal (211) eine Schüttgutförderstreckenabdeckung (2112) aufweist und wobei der erste Abschnitt (4) einen, bevorzugt mit der Schüttgutförderstreckenabdeckung (2112) abgedeckten, nach oben geschlossenen Abschnitt (42) aufweist.

13. Fördervorrichtung (1) nach einem der Ansprüche 1 bis 12, wobei die Schüttgutförderstrecke (21), insbesondere der Schüttgutförderkanal (211) eine Schüttgutförderstreckenabdeckung (2112) aufweist und wobei der erste Abschnitt (4) einen nach oben offenen Abschnitt (41) und einen nach oben mit der Schüttgutförderstreckenabdeckung (2112) abgedeckten geschlossenen Abschnitt (42) aufweist, wobei der nach oben offenen Abschnitt (41) vor dem nach oben geschlossenen Abschnitt (42) angeordnet ist und/oder bevorzugt das Schüttgutfördermittel (2) eine Schüttgutförderschnecke ist, die im nach oben offenen Abschnitt (41) eine Steigung aufweist, die kleiner ist als im geschlossenen Abschnitt (42).

14. Heizungsanlage (100), bevorzugt eine Schüttgutheizanlage, insbesondere eine Hackschnitzelheizung, umfassend
- einen Schüttgutspeicher (6) zum Speichern von Schüttgut, insbesondere Hackschnitzel;
- eine Brenneinrichtung (7) der Heizungsanlage (100), insbesondere Heizkessel, zur Erzeugung von Wärme mittels Verbrennens des Schüttgutes; und
- eine Fördervorrichtung (1) nach einem der Ansprüche 1 bis 13, wobei das Schüttgutfördermittel (2) eine Schüttgutförderschnecke ist, geeignet, das als Schüttgut vorliegende Brennmaterial entlang der Schüttgutförderstrecke (21), insbesondere von einem Schüttgutspeicher (6) zu einer Brenneinrichtung (7) der Heizungsanlage (100), zu befördern.

15. Verfahren zum Fördern von Schüttgut in eine Heizungsanlage (100), insbesondere eine Schüttgutheizanlage, umfassend die folgenden Schritte:
- einen Schritt a) des Förderns des Schüttguts entlang einer Schüttgutförderstrecke (21) einer Fördervorrichtung (1), bevorzugt nach einem der Ansprüche 1 bis 13, von einem Schüttgutspeicher (6) zu einer Brenneinrichtung (7) der Heizungsanlage (100) mittels eines Schüttgutfördermittels (2), insbesondere einer Schüttgutförderstrecke (21);
- einen Schritt b) der Siebung des Schüttguts durch ein zwischen der Schüttgutförderstrecke (21) und einem Siebgutauffang (311), der wenigstens in einem ersten Abschnitt (4) der Schüttgutförderstrecke (21) unterhalb der Schüttgutförderstrecke (21) angeordnet ist, angeordneten Sieb (5);
- einen Schritt d) des Auffangens von in Schritt b) erzeugtem Siebgut in dem Siebgutauffang (311);
- bevorzugt, einen Schritt e) des Förderns von Siebgut entlang einer Siebgutförderstrecke (31) des Siebgutauffang (311) mittels eines Siebgutfördermittels (3), insbesondere einer Siebgutförderschnecke,
- wobei bevorzugt die Heizungsanlage (100) eine Heizungsanlage (100) nach Anspruch 14 ist, und wobei bevorzugt
- ein Schritt b) wenigstens teilweise in dem Schüttgutspeicher (6) ausgeführt wird.
